# EUROPÄISCHE PATENTSCHRIFT

(11) **EP 2 399 869 B1**
(45) Veröffentlichungstag und Bekanntmachung des Hinweises auf die Patenterteilung: **29.07.2015**
(21) Anmeldenummer: 10167337.4
(22) Anmeldetag: 25.06.2010
(51) Int. Cl.: C01G 53/00, C01G 45/12, H01M 4/505, H01M 4/525, H01M 10/052, C01G 51/00

(54) **MISCHOXIDPULVER ENTHALTEND DIE ELEMENTE LITHIUM, MANGAN, NICKEL UND COBALT UND VERFAHREN ZU DEREN HERSTELLUNG**
MIXED OXIDE POWDER CONTAINING THE ELEMENTS LITHIUM, MANGANESE, NICKEL AND COBALT AND METHOD FOR PRODUCING SAME
POUDRE D'OXYDE MIXTE CONTENANT LES ÉLÉMENTS LITHIUM, MANGANÈSE, NICKEL ET COBALT ET LEUR PROCÉDÉ DE FABRICATION

(43) Veröffentlichungstag der Anmeldung: 28.12.2011
(73) Patentinhaber: Evonik Degussa GmbH, 45128 Essen (DE)
(72) Erfinder: Katusic, Stipan, Prof., 65812 Bad Soden (DE); Kress, Peter, 63791 Karlstein (DE); Zimmermann, Jutta, Dr., 63755 Alzenau (DE); Meyer, Jürgen, Dr., 63811 Stockstadt (DE); Asbahr, Hark-Oluf, Dr., 67161 Gönnheim (DE)

(56) Entgegenhaltungen:
- EP-A1- 1 391 950
- WO-A1-2005/105673
- WO-A1-2007/116971
- N. TRAN, L. CROGUENNEC, C. JORDY, PH. BIENSAN, C. DELMAS: "Influence of the synthesis route on the electrochemical properties of LiNi0.425Mn0.425Co0.15O2", SOLID STATE IONICS, Bd. 176, 2005, Seiten 1539-1547, XP002610850,
- S.H. JU, D.Y. KIM, Y.C. KANG: "The characteristics of Li(Ni1/3Co1/3Mn1/3)O2 particles preparedfrom precursor particles with spherical shape obtained", CERAMICS INTERNATIONAL, Bd. 33, Nr. 6, 2007, Seiten 1093-1098, XP002610851,

## Beschreibung

Die Erfindung betrifft ein Mischoxidpulver enthaltend die Elemente Lithium, Mangan, Nickel und Cobalt, ein Verfahren zu dessen Herstellung mittels eines Spray-Pyrolyseverfahrens sowie eine dieses Mischoxidpulver enthaltende Sekundärbatterie.

EP-A-9441125 offenbart ein Pulver der Zusammensetzung LiₐCo_{b}Mn_{c}Ni_{1-b-c}O₂ mit 0 ≤ a ≤ 1,2, 0,01 ≤ b ≤ 0,4, 0,01 ≤ c ≤ 0,4 und 0,02 ≤ b+c ≤ 0,5, einer mittleren Partikelgröße von 3 bis 30 µm, wobei 10% der Partikel einen mittleren Partikeldurchmesser von weniger als 1 µm aufweisen und einer BET-Oberfläche von 0,15 bis 2 m²/g. Das Pulver wird erhalten, indem man ein Gemisch der Hydroxide von Lithium, Cobalt und Nickel sowie Mangandioxid vermischt über einen Zeitraum von 20 Stunden bei einer Temperatur von 750°C thermisch behandelt und das erhaltene Gemisch nachfolgend vermahlt.

EP-A-1295851 offenbart ein Pulver der Zusammensetzung Li₁₊ₓ₊ₐ Ni_{(1-x-y+δ)2}Mn_{(1-x-yδ)/2}CO_{y}O₂ mit 0 ≤ x ≤ 0,05, -0,05 ≤ x+ α ≤ 0,05, 0 ≤ y ≤ 0, 4; -0,1 ≤ δ ≤ 0,1, falls 0 ≤ y ≤ 0,2) oder -0,24 ≤ δ ≤ 0.24, falls 0,2 < y ≤ 0,4). Diese Pulver zeigen im Röntgendiffraktogramm die vom Lithiumnitrat her bekannte Schichtstruktur mit Signalen bei einem Winkel 20 von ca. 18° (I₍₀₀₃₎) und ca. 44° (I₍₁₀₄₎). Dabei beträgt das Verhältnis der Signalintensitäten I₍₀₀₃₎/I₍₁₀₄₎ 0,83 bis 1,11 für 0 ≤ y ≤ 0,2 und 1 bis 1,43 für 0,2 < y ≤ 0,4.

In EP-B-1390994 wird ein Mischoxid als Kathodenzusammensetzung für eine Lithiumionenbatterie mit der Formel Li(Ni_{y}Co_{1-2y}Mn_{y})O₂ offenbart, mit 0,167 < y < 0,5 und wobei die Zusammensetzung in Form einer einzigen Phase mit einer 03-Kristallstruktur vorliegt, die keiner Phasenumwandlung zu einer Spinellkristallstruktur unterliegt, wenn sie in eine Lithiumionenbatterie eingebracht ist und 100 volle Lade-/Entlade-Zyklen bei 30°C und einer Endkapazität von 130 mAh/g unter Verwendung eines Endladestroms von 30 mA/g durchläuft.

In EP-A-1391950 wird ein Mischoxid als positives Elektrodenmaterial der Zusammensetzung LiₓMn_{0,5-a}Ni_{0,5-b}O₂ mit 0<x<1,3, 0,05 < a < 0,3, 0,05 ≤ b < 0,3, 0,1 ≤ a-b ≤ 0,02 und a + b < 0,5 offenbart, welches eine BET-Oberfläche von 0,3 bis 1,6 m²/g, einen d₅₀-Wert von größer 0,8 µm und nicht größer als 10 µm, wobei der d₁₀-Wert zwischen 0,7 µm und 7 µm liegt, und ein Verhältnis der Signalintensitäten I(₀₀₃₎/I₍₁₀₄₎ von 0,95 bis 1,54 aufweist. Die Mischoxide besitzen eine Struktur mit der R3/m Symmetriegruppe. Die Mischoxide werden durch Co-Fällung in wässriger Lösung erhalten.

Li et al. offenbaren in Trans. Nonferrous Met. Soc. China 17 (2007) 897-901 ein Mischoxidpulver der Zusammensetzung LiNi_{1/3}Co_{1/3}Mn_{1/3}O₂ mit einem maximalen Verhältnis der Signalintensitäten I₍₀₀₃₎/I₍₁₀₄₎ von 1,62.

Periasamy et al. offenbaren in Int. J. Electrochem. Sci. 2 (2007) 689-699 ein Mischoxidpulver der Zusammensetzung LiNi_{1/3}Co_{1/3}Mn_{1/3}O₂ mit einem maximalen Verhältnis der Signalintensitäten I₍₀₀₃₎/I₍₁₀₄₎ von 1,347.

Huang et al. offenbaren in Asia-Pac. J. Chem. Eng. 3 (2008) 527-530 ein Mischoxidpulver der Zusammensetzung LiNi_{1/3}Co_{1/3}Mn_{1/3}O₂ mit einem Verhältnis der Signalintensitäten I₍₀₀₃₎/I₍₁₀₄₎ von 1,48.

Jeong et al. offenbaren in Bull. Korean Chem. Soc. 30 (2009) 2603-2607 ein Mischoxidpulver der Zusammensetzung LiNi_{1/3}Co_{1/3}Mn_{1/3}O₂ mit einem maximalen Verhältnis der Signalintensitäten I₍₀₀₃₎/I₍₁₀₄₎ von 1,38.

Rambabu et al. offenbaren in Int. J. Elektrochem. Sci. 4 (2009) 1770-1778 ein Mischoxidpulver der Zusammensetzung Li₁,₁₀Ni_{1/3}Co_{1/3}Mn_{1/3}O₂ mit einem Verhältnis der Signalintensitäten I₍₀₀₃₎/I₍₁₀₄₎ von kleiner als 1,2.

Die genannten Pulver werden erhalten, indem man ein Gemisch der Hydroxide von Lithium, Cobalt und Nickel sowie Mangandioxid vermischt über einen Zeitraum von 20 Stunden bei einer Temperatur von 750°C thermisch behandelt und das erhaltene Gemisch nachfolgend vermahlt.

EP-A-2006937 offenbart Mischoxide der Zusammensetzung
Li[Li_{z/(2+z)}{(LiₓNi₍₁₋₃ₓ)/2Mn_{(i+x)/2)1-y}Coy}O₂ mit
0 ≤ x ≤ 0.33, 0 ≤ y ≤0.2, and -0.02≤ z≤ 0.2(1-y)(1-3x).
Der mittlere Partikeldurchmesser beträgt in der Regel wenigstens 0,6 µm und weniger als 5µm. Aus den Beispielen lässt sich ein Verhältnis der Signalintensitäten I₍₀₀₃₎/I₍₁₀₄₎ von maximal 2 entnehmen.

In Solid State lonics, 176, 2005, 1539-1547werden Mischoxidpulver der Zusammensetzung LiNi_{0,425}Mn_{0,425}Co_{0,15}O₂ mit einer bimodalen Partikelgrössenverteilung und einer BET-Oberfläche von 0,98 - 2,1 m²/g offenbart. Das Verhältnis der Signalintensitäten I₍₀₀₃₎/I₍₁₀₄₎ ist ca. 1.

In Ceramics International, 33, 6, 2007, 093-1098 wird ein Verfahren zur Herstellung eines Mischoxides der Zusammensetzung LiNi_{0,5-a}Mn_{0,5-b}Co_{a+b}, wobei a=b=1/6,
durch Sprühpyrolyse einer wässrigen Lösung aus den entsprechenden Nitraten und Lithiumcarbonat offenbart. Das so erhaltene Material wird
mit Ultraschall behandelt und bei 900°C in einen Spray-Pyrolyse-Reaktor eingesprüht wird. Das Verhältnis der Signalintensitäten I₍₀₀₃₎/I₍₁₀₄₎ ist kleiner als 2.

WO2005/105673 offenbart ein Verfahren zur Herstellung von aggregierten, Edelmetall dotierten Metall-Mischoxidpulvern im Bereich der Katalysatortechnik, bei dem man eine Lösung oder Dispersion, enthaltend Verbindungen mit den Metallkomponenten der Oxide in einen Reaktor zerstäubt und in einer Flamme aus Wasserstoff und Luft pyrolysiert, und in einem Bereich, der das letzte Drittel der Flamme umfasst, dem Pyrolysegemisch, an einer oder mehreren Stellen, eine Edelmetallkomponente und nachfolgend reduzierende Gase zudosiert.

Die genannten Pulver sind prinzipiell als Kathodenmaterial von Sekundärbatterien einsetzbar, zeigen jedoch bezüglich der zu erzielenden Kapazität und der Entladecyclen Schwächen. Die technische Aufgabe der vorliegenden Erfindung war es daher ein verbessertes Material sowie ein Verfahren zu dessen Herstellung bereitzustellen.

Gegenstand der Erfindung ist ein Verfahren zur Herstellung eines Mischoxides der Zusammensetzung LiₓMn_{0,5-a} Ni_{0,5-b} Co_{a+b} O₂, mit
a) 0,8 ≤ x ≤ 1,2, 0,05 ≤ a ≤ 0,3, 0,05 ≤ b < 0,3, -0,1 ≤ a-b ≤ 0,02 und a+b < 0,5 und
b) einer BET-Oberfläche von 3 bis 20 m²/g,
c) einer multimodale Partikelgrößenverteilung und
d) einem d₅₀-Wert von kleiner oder gleich 5 µm
   a) einen Strom einer Lösung, welche jeweils wenigstens eine Metallverbindung der Mischoxidkomponenten bestehend aus Lithium, Kobalt, Mangan und Nickel im erforderlichen stöchiometrischen Verhältnis enthält, mittels eines Zerstäubergases zu einem Aerosol zerstäubt, wobei
      a1) die Konzentration der Lösung an Metallverbindungen wenigstens 10 Gew.-%, bevorzugt 10 bis 20 Gew.-%, besonders bevorzugt 12 bis 18 Gew.-%, gerechnet jeweils als Metalloxid, beträgt,
      a2) das Verhältnis Massestrom der Lösung/Volumenstrom des Zerstäubergases,
         in g Lösung/Nm³ Zerstäubergas, wenigstens 500, bevorzugt 500 bis 3000, besonders bevorzugt 600 bis 1000, ist und
      a3) die mittlere Tröpfchengröße 100 µm oder weniger, bevorzugt 30 bis 100 µm, beträgt
   b) das Aerosol in einem Reaktionsraum mit einer Flamme, die aus einem Brenngas und einem Sauerstoff enthaltenden Gas, in der Regel Luft oder mit Sauerstoff angereicherte Luft, erhalten, wird, zur Reaktion bringt, wobei die Gesamtmenge an Sauerstoff mindestens zur vollständigen Umsetzung des Brenngases und der Metallverbindungen ausreicht,
   c) den Reaktionsstrom kühlt und
   d) anschließend das feste Produkt aus dem Reaktionsstrom abtrennt.

Weiterhin wurde festgestellt, dass besonders gute Mischoxide A für die Verwendung in Sekundärbatterien hinsichtlich der Kapazität und der zu erzielenden Lade-/ Entladecyclen erhalten werden, wenn
- eine hohe mittlere Austrittsgeschwindigkeit des Aerosoles in den Reaktionsraum, bevorzugt von mindestens 50 ms⁻¹, besonders bevorzugt von 100 bis 300 ms⁻¹ vorliegt, und/oder
- eine niedrige mittlere Geschwindigkeit des Reaktionsgemisches im Reaktionsraum, bevorzugt von 0,1 ms⁻¹ bis 10 ms⁻¹, besonders bevorzugt von 1 bis 5 ms⁻¹ vorliegt.

Das gemäß des erfindungsgemäßen Verfahrens hergestellte Mischoxid soll im Rahmen der vorliegenden Erfindung als Mischoxid A bezeichnet werden. Unter Mischoxid ist die innige Vermischung aller Mischoxidkomponenten zu verstehen. Es handelt sich demnach weitestgehend um eine Mischung auf atomarer Ebene, nicht um eine physikalische Mischung von Oxiden. Im Rahmen der Erfindung werden die Begriffe Mischoxid, Mischoxidpulver und Mischoxidpartikel äquivalent verwendet. Die Mischoxidpartikel liegen in der Regel in Form von aggregierten Primärpartikeln vor.

Die BET-Oberfläche wird bestimmt nach DIN ISO 9277. Das Makroporenvolumen (Hg-Porosimetrie) wird bestimmt nach DIN 66133.

Der d₅₀-Wert resultiert aus der Summendurchgangsverteilungskurve der volumengemittelten Grössenverteilung, Diese wird in üblicher Weise durch Laserbeugungsmethoden ermittelt. Im Rahmen der vorliegenden Erfindung wird hierzu ein Gerät Cilas 1064 der Firma Cilas eingesetzt. Unter einem d₅₀-Wert wird verstanden, dass 50% der Mischoxidpartikel A innerhalb des angegebenen Grössenbereichs liegen. Unter einem d₉₀-Wert wird verstanden, dass 90% der Mischoxidpartikel A innerhalb des angegebenen Grössenbereichs liegen. Unter einem d₉₉-Wert wird verstanden, dass 99% der Mischoxidpartikel A innerhalb des angegebenen Grössenbereichs liegen. Der d₉₀-Wert der Mischoxidpartikel A kann bevorzugt 1 bis 10 µm, besonders bevorzugt 2 bis 5 µm betragen. Der d₉₉-Wert der Mischoxidpartikel A kann bevorzugt 3 bis 15 µm, besonders bevorzugt 4 bis 8 µm betragen.

Unter Multimodalität wird im Rahmen dieser Erfindung eine Partikelgrößenverteilung mit zwei oder mehr deutlich erkennbaren Maxima in einem Histogramm verstanden. Eine bimodale Partikelgrößenverteilung ist eine Häufigkeitsverteilung mit genau zwei Maxima. In einer besonderen Ausführungsform der Erfindung weist das Mischoxidpulver A eine bimodale oder trimodale Partikelgrößenverteilung auf.

Dabei ist es vorteilhaft, wenn ein Maximum im Bereich von 0,1 bis 1 µm und ein, im Falle einer bimodalen Partikelgrößenverteilung, oder mehrere Maxima, im Falle einer multimodalen Partikelgrößenverteilung, jeweils im Bereich von 2 bis 8 µm aufweist.

Es kann weiterhin vorteilhaft sein, wenn das Maximum im Bereich von 0,1 bis 1 µm weniger als 50% der volumengemittelten Grössenverteilung umfasst.

Es ist für die vorliegende Erfindung wesentlich, dass die Metallverbindungen in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind. Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate oder Laurate eingesetzt werden. Die Lösung kann ein oder mehrere anorganische Metallverbindungen, ein oder mehrere organische Metallverbindungen oder Mischungen von anorganischen und organischen Metallverbindungen enthalten.

Bei den Lösungsmitteln kann bevorzugt aus der Gruppe bestehend aus Wasser, C₅-C₂₀-Alkanen, C₁-C₁₅-Alkancarbonsäuren und/oder C₁-C₁₅-Alkanolen ausgewählt werden. Besonders bevorzugt kann Wasser oder ein Mischung aus Wasser und einem organischen Lösungsmittel eingesetzt werden.

Als organische Lösungsmittel, beziehungsweise als Bestandteil von organischen Lösungsmittelgemischen, können bevorzugt Alkohole wie Methanol, Ethanol, n-Propanol, iso-Propanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden.

Die Menge an Sauerstoff ist bei dem erfindungsgemäßen Verfahren so zu wählen, dass sie mindestens zur vollständigen Umsetzung des Brenngases und der Metallverbindungen ausreicht. Es ist in der Regel vorteilhaft einen Überschuß an Sauerstoff einzusetzen. Dieser Überschuß wird zweckmäßigerweise ausgedrückt als das Verhältnis von vorhandenem Sauerstoff / Verbrennung des Brenngases notwendiger Sauerstoff und als lambda bezeichnet. Lambda beträgt bevorzugt 1,8 bis 4,0. Geeignete Brenngase können Wasserstoff, Methan, Ethan, Propan, Butan und deren Gemische sein. Bevorzugt wird Wasserstoff eingesetzt.

Ein weiterer Gegenstand der Erfindung ist ein Mischoxid mit der Zusammensetzung LiₓMn_{0,5-a} Ni_{0,5-b} Co_{a+b} O₂,
a) mit 0,8 ≤ x ≤ 1,2, bevorzugt 0,9 ≤ x ≤ 1,1, besonders bevorzugt x = 1
   0,05 ≤ a ≤ 0,3, bevorzugt 0,1 ≤ a ≤ 0,2, besonders bevorzugt a = 1/6
   0,05 ≤ b < 0,3, bevorzugt 0,1 ≤ b ≤ 0,2, besonders bevorzugt b = 1/6
   -0,1 ≤ a-b ≤ 0,02, bevorzugt a = b
   a + b < 0,5, bevorzugt 0,15 ≤ a+b ≤ 0,4, welches
b) welches eine BET-Oberfläche von 0,05 bis 1 m²/g, bevorzugt 0,1 bis 0,5 m²/g aufweist,
c) einen d₅₀-Wert kleiner oder gleich 10 µm, bevorzugt 0,5 bis 6 µm, besonders bevorzugt 1 bis 4 µm, hat und bei dem
d) im Röntgendiffraktogramm das Verhältnis der Intensitäten der Signale bei 2Θ = 18,6 ±1° zu 20 = 44,1±1°größer oder gleich 2,4, bevorzugt 2,4 bis 5, ist.

Dieses Mischoxid soll im Rahmen der vorliegenden Erfindung als Mischoxid B bezeichnet werden. Es unterscheidet sich vom Mischoxid A unter anderem in einer höheren Kristallinität.

Der d₉₀-Wert der erfindungsgemäßen Mischoxidpartikel B kann bevorzugt 2 bis 20 µm, besonders bevorzugt 3 bis 10 µm betragen. Der d₉₉-Wert der erfindungsgemäßen Mischoxidpartikel B kann bevorzugt 3 bis 30 µm, besonders bevorzugt 4 bis 20 µm betragen.

Mischoxid B zeichnet sich durch ein Verhältnis der Intensitäten der Signale bei 20 = 18,6 ±1 ° zu 20 = 44,1±1 °von größer oder gleich 2,4 aus. Es wird davon ausgegangen, dass dieser im Vergleich zu den im Stand der Technik bekannten, hohe Wert mitentscheidend für die guten Eigenschaften des Mischoxides B als Bestandteil von Sekundärbatterien ist. Die Röntgendaten werden ermittelt mittels eines Diffraktometers mit Cu-K_{α} Strahlung von PANanalytical X'Pert PRO in einem Bereich 2 Θ (2Theta) von 10-100° bei einer Scan-Rate von 0,017°/step, Meßzeit 80s/step, entsprechend 0,0265°/s. Die Auswertung erfolgte mittels der Rietveld-Verfeinerung.

Mischoxid B weist bevorzugt eine Halbwertsbreite des Signales, bestimmt mittels Software X'Pert Data Viewer, bei
20 = 18,6 ±1 ° >0,20 bis 0,40, bevorzugt 0,22 bis 0,32, und
20 = 44,1±1° 0,25 bis 0,40, bevorzugt 0,27 bis 0,35 auf.

Weiterhin zeigt Mischoxid B bevorzugt eine hexagonale Kristallgitterstruktur mit einer R3m-Raumgruppe. Für die Gitterkonstante a gilt
2,860 ≤ a ≤ 2,900, bevorzugt 2,865 ≤ a ≤ 2,890
und für die Gitterkonstante c gilt
14,200 ≤ c ≤ 14,320, bevorzugt 14,250 ≤ c ≤ 14,280,
alle angegeben in Angstrom, wobei weiterhin gilt
1,650 ≤c/3a ≤ 1,660, bevorzugt 1,662 ≤c/3a ≤ 1,658 .

Weiterhin zeigt Mischoxid B ein Volumen der Poren mit einem Durchmesser von mehr als 50 nm von bevorzugt 0,3 bis 1,2 ml/g und besonders bevorzugt von 0,4 bis 0,9 ml/g. Die Bestimmung des Porenvolumens erfolgt durch Hg-Intrusion.

Ein weiterer Gegenstand der Erfindung ist ein Verfahren zur Herstellung des Mischoxides B bei dem man das Mischoxid A bei Temperaturen von 500 bis 1100°C, bevorzugt 900 bis 1050°C, über einen Zeitraum von 2 bis 36 Stunden thermisch behandelt.

Somit umfasst die Herstellung des Mischoxides B die Verfahrensschritte zur Herstellung des Mischoxides A. Insgesamt umfasst die Herstellung des Mischoxides B ein Verfahren bei dem man
a) einen Strom einer Lösung, welche jeweils wenigstens eine Metallverbindung der Mischoxidkomponenten bestehend aus Lithium, Kobalt, Mangan und Nickel im erforderlichen stöchiometrischen Verhältnis enthält, mittels eines Zerstäubergases zu einem Aerosol zerstäubt, wobei
   a1) die Konzentration der Lösung an Metallverbindungen wenigstens 10 Gew.-%, bevorzugt 10 bis 20 Gew.-%, besonders bevorzugt 12 bis 18 Gew.-%, gerechnet jeweils als Metalloxid, beträgt,
   a2) das Verhältnis Massestrom der Lösung/Volumenstrom des Zerstäubergases,
      in g Lösung/Nm³ Zerstäubergas, wenigstens 500, bevorzugt 500 bis 3000, besonders bevorzugt 600 bis 1000, ist und
   a3) die mittlere Tröpfchengröße 100 µm oder weniger, bevorzugt 30 bis 100 µm, beträgt
b) das Aerosol in einem Reaktionsraum mit einer Flamme, die aus einem Brenngas und einem Sauerstoff enthaltenden Gas, in der Regel Luft oder mit Sauerstoff angereicherte Luft, erhalten, wird, zur Reaktion bringt, wobei die Gesamtmenge an Sauerstoff mindestens zur vollständigen Umsetzung des Brenngases und der Metallverbindungen ausreicht,
c) den Reaktionsstrom kühlt und
d) anschließend das feste Produkt aus dem Reaktionsstrom abtrennt und
e) über einen über einen Zeitraum von 2 bis 36 Stunden bei 500 bis 1100°C thermisch behandelt.

Ein weiterer Gegenstand der Erfindung ist eine Sekundärbatterie, welche das erfindungsgemäße Mischoxidpulver als Material der positiven Elektrode enthält.

### Beispiele

### Mischoxidpulver A

Eingesetzte Lösungen: Für die Beispiele 1 bis 6 wird jeweils eine Lösung, die die in der Tabelle 1 genannten Salze enthält mit Wasser beziehungsweise 2-Ethylhexansäure (2-EHA) als Lösungsmittel hergestellt.

Aus der Lösung und Zerstäuberluft wird mittels einer Düse ein Aerosol erzeugt, welches in einen Reaktionsraum zerstäubt wird. Hier brennt eine Knallgasflamme aus Wasserstoff und Luft, in der das Aerosol zur Reaktion gebracht wird. Nach Abkühlung wird das Mischoxidpulver A an einem Filter von gasförmigen Stoffen abgetrennt.

### Mischoxidpulver B

Die Mischoxidpulver A werden nachfolgend in einem Ofen über einen bestimmten Zeitraum thermisch behandelt.

Tabelle 1 nennt alle relevanten Parameter zur Herstellung der Mischoxidpulver sowie wichtige Stoffeigenschaften der erhaltenen Pulver.

**Tabelle 1: Mischoxidpulver A mit der Zusammensetzung Liₓ Mn_{0,5-a} Ni_{0,5-b} CO_{a+b} O₂**

| Beispiel | | **1** | **2** | **3** | **4** | **5** | **6** |
|---|---|---|---|---|---|---|---|
| x | | 1,10 | 0,96 | 0,93 | 0,96 | 1,00 | 0,85 |
| a | | 0,15 | 0,19 | 0,16 | 0,17 | 0,18 | 0,15 |
| b | | 0,23 | 0,17 | 0,17 | 0,10 | 0,09 | 0,23 |
| Lithiumacetat | Gew.-% | 1,08 | 1,15 | 1,15 | 1,21 | 1,21 | - |
| Lithiumoctoat | Gew.-% | - | - | - | - | - | 4,68 |
| Nickel(II)acetat | Gew.-% | 3,03 | - | - | - | - | - |
| Nickel(II)nitrat | Gew.-% | - | 3,20 | 3,20 | 4,02 | 4,02 | - |
| Nickel(II)oktoat | Gew.-% | - | - | - | - | - | 6,94 |
| Mangan(II)acetat | Gew.-% | 2,84 | - | - | - | - | - |
| Mangan(II)nitrat | Gew.-% | - | 2,99 | 2,99 | 2,89 | 2,89 | - |
| Mangan(II)octoat | Gew.-% | - | - | - | - | - | 6,47 |
| Cobalt(II)acetat | Gew.-% | 3,04 | - | - | - | - | - |
| Cobalt(II)nitrat | Gew.-% | - | 3,21 | 3,21 | 2,17 | 2,17 | - |
| Cobalt(II)octoat | Gew.-% | - | - | - | - | - | 7,75 |
| Lösungsmittel | | H₂O | H₂O | H₂O | H₂O | H₂O | 2-EHA |
| Viskosität¹⁾ | mPas | 5 | 6,5 | 6,5 | 8,0 | 7,5 | 290 |
| Σ MeX²⁾ | Gew.-% | 14,47 | 15,18 | 15,18 | 14,91 | 14,91 | 10,71 |
| m'_{LSG}³⁾ | g/h | 2500 | 2000 | 1500 | 1500 | 1800 | 2000 |
| m'_{ZSL}⁴⁾ | Nm³/h | 1,0 | 2,5 | 2,5 | 2,5 | 2,5 | 2,0 |
| M'_{LSG}/ m'_{ZSL} | g/Nm³ | 2500 | 800 | 600 | 600 | 720 | 1000 |
| V₁⁵⁾ | m/s | 88,4 | 221,0 | 221,0 | 221,0 | 221,0 | 176,8 |
| d₉₀⁶⁾ | µm | 87 | 92 | 91 | 89 | 93 | 96 |
| Wasserstoff | Nm³/h | 4,6 | 5,5 | 5,5 | 5,5 | 5,5 | 8 |
| Luft | Nm³/h | 26 | 25 | 25 | 25 | 25 | 28 |
| Lambda | | 2,37 | 1,87 | 1,87 | 1,87 | 1,87 | 1,47 |
| V₂⁷⁾ | m/s | 2,44 | 2,44 | 2,39 | 2,39 | 2,42 | 2,46 |
| t₂⁸⁾ | s | 1,23 | 1,23 | 1,26 | 1,26 | 1,24 | 1,22 |
| T_{FI1}⁹⁾ /T_{FI2}¹⁰⁾ | °C | 826/571 | 874/602 | 912/635 | 907/614 | 896/632 | 1005/751 |
| BET-Oberfläche | m²/g | 8,0 | 5,3 | 5,2 | 4,0 | 8,0 | 16,0 |
| Partikelverteilung | µm/% | trimodal | bimodal | bimodal | trimodal | trimodal | bimodal |
| Max₁ / Anteil | | 0,7/22,7 | 1,9/48,8 | 1,9/56,2 | 0,7/23,2 | 0,8/23,0 | 2,1/51,6 |
| Max₂ / Anteil | | 1,8/30,0 | 8,0/51,2 | 8,5/43,8 | 1,8/31,1 | 1,9/30,8 | 7,5/48,4 |
| Max₃ / Anteil | | 7,0/47,3 | -/- | -/- | 7,3/45,7 | 7,5/46,2 | -/- |
| d₅₀ | µm | 0,967 | 1,421 | 1,371 | 1,621 | 0,927 | 1,05 |
| d₉₀ | | 2,435 | 4,112 | 3,945 | 4,057 | 2,654 | 2,43 |
| d₉₉ | | 5,311 | 6,037 | 5,783 | 6,372 | 5,112 | 6,01 |

**Tabelle 2: Mischoxidpulver B mit der Zusammensetzung Liₓ Mn_{0,5-a} Ni_{0,5-b} Co_{a+b} O₂**

| Beispiel | | **1** | **2** | **3** | **4** | **5** | **6** | **7¹¹⁾** | **8¹¹⁾** |
|---|---|---|---|---|---|---|---|---|---|
| T_{Ofen} | °C | 1050 | 925 | 925 | 950 | 950 | 1020 | - | - |
| t_{Tempern} | h | 20 | 4 | 4 | 4 | 4 | 12 | - | - |
| BET | m^{2/g} | 0,1 | 0,1 | 0,1 | 0,2 | 0,1 | 0,7 | 0,4 | 0,27 |
| I_{118,6°} | | 8470 | 13540 | 12380 | 18800 | 12130 | 4430 | 15020 | 12230 |
| I_{44,1°} | | 3080 | 4960 | 5130 | 4100 | 4090 | 1750 | 7200 | 7110 |
| I_{18,6°}/I_{44,1°}¹²⁾ | | 2,75 | 2, 73 | 2,41 | 4,59 | 2,97 | 2,57 | 2,09 | 1,72 |
| HW_{18,6°}¹³⁾ | | 0,31 | 0,24 | 0,22 | 0,22 | 0,26 | n.b.¹⁴⁾ | n.b. | n.b. |
| HW_{44,1°}¹³⁾ | | 0,31 | 0,27 | 0,25 | 0,33 | 0,34 | n.b. | n.b. | n.b. |
| a | Ǻ | 2,854 | 2,868 | 2,874 | 2,889 | 2,872 | 2,850 | 2,859 | 2,858 |
| c | Ǻ | 14,212 | 14,264 | 14,275 | 14,319 | 14,264 | 14,226 | 14,233 | 14,227 |
| c/3a | | 1,656 | 1,658 | 1,656 | 1,652 | 1,656 | 1,664 | 1,659 | 1,659 |
| V_{Makroporen} | ml/g | 0,30 | 0,43 | 0,64 | 0,43 | 0,50 | 0,89 | n.b. | n.b. |
| d₅₀ | µm | 5,5 | 1,4 | 2,2 | 3,6 | 1,2 | 3,5 | 6,66 | 8,52 |
| d₉₀ | | 10,0 | 3,0 | 4,99 | 6,2 | 2,7 | 8,0 | 9,53 | 12,44 |
| d₉₉ | | 14,7 | 4,5 | 8,6 | 8,4 | 4,0 | 16,1 | 12,65 | 16,82 |

Erklärungen zu Tabelle 1 und 2:
1) Viskosität bei 20°C; nach DIN ISO 3219
2) als Oxide
3) m'_{LSG} = Massenstrom Lösung
4) m'_{ZSL} = Volumenstrom Zerstäuberluft
5) v₁ = mittlere Austrittsgeschwindigkeit des Aerosoles in den Reaktionsraum;
6) d₉₀-Wert der Tropfen bei der Aerosol-Erzeugung
7) v₂ = mittlere Geschwindigkeit im Reaktor;
8) t₂ = mittlere Verweilzeit im Reaktor;
9) T_{FI1} = 50 cm von Brennermund;
10)T_{FI2} = 200 cm von Brennermund;
11) kommerziell erhältliche Mischoxidpulver der Zusammensetzung LiNi_{1/3}Mn_{1/3}Co_{1/3}O₂
12) Verhältnis der Intensitäten der Signale bei 2Θ = 18,6 ±1° zu 2Θ = 44,1±1°;
13) Halbwertsbreite der Signale bei 20 = 18,6 ±1° bzw. 20 = 44,1±1°
14) n.b. = nicht bestimmt

## Patentansprüche

1. Verfahren zur Herstellung eines Mischoxides der Zusammensetzung Liₓ Mn_{0,5-a} Ni_{0,5-b} Co_{a+b} O₂, mit
a) 0,8 ≤ x ≤ 1,2, 0,05 ≤ a ≤ 0,3, 0,05 ≤ b < 0,3, -0,1 ≤ a-b ≤ 0,02 und a+b < 0,5 und
b) einer BET-Oberfläche von 3 bis 20 m²/g,
c) einer multimodale Partikelgrößenverteilung und
d) einem d₅₀-Wertvon kleiner oder gleich 5 µm
**dadurch gekennzeichnet, dass**
a) man einen Strom einer Lösung, welche jeweils wenigstens eine Metallverbindung der Mischoxidkomponenten bestehend aus Lithium, Kobalt, Mangan und Nickel im erforderlichen stöchiometrischen Verhältnis enthält, mittels eines Zerstäubergases zu einem Aerosol zerstäubt, wobei
a1) die Konzentration der Lösung an Metallverbindungen wenigstens 10 Gew.-%, gerechnet jeweils als Metalloxid, beträgt,
a2) das Verhältnis Massestrom der Lösung/Volumenstrom des Zerstäubergases, in g Lösung/Nm³ Zerstäubergas, wenigstens 500 ist und
a3) die mittlere Tröpfchengröße 100 µm oder weniger beträgt,
b) das Aerosol in einem Reaktionsraum mit einer Flamme, die aus einem Brenngas und einem Sauerstoff enthaltenden Gas erhalten wird, zur Reaktion bringt, wobei die Gesamtmenge an Sauerstoff mindestens zur vollständigen Umsetzung des Brenngases und der Metallverbindungen ausreicht,
c) den Reaktionsstrom kühlt und
d) anschließend das feste Produkt aus dem Reaktionsstrom abtrennt.

2. Verfahren nach Anspruch 1, **dadurch gekennzeichnet, dass** die mittlere Austrittsgeschwindigkeit des Aerosoles in den Reaktionsraum mindestens 50 ms⁻¹ und die mittlere Geschwindigkeit des Reaktionsgemisches im Reaktionsraum 0,1 ms⁻¹ bis 10 ms⁻¹ ist.

3. Verfahren nach den Ansprüchen 1 oder 2, **dadurch gekennzeichnet, dass** anorganische und/oder organische Metallverbindungen eingesetzt werden.

4. Verfahren nach den Ansprüchen 1 bis 3, **dadurch gekennzeichnet, dass** das Lösungsmittel ausgewählt ist aus der Gruppe bestehend aus Wasser, C₅-C₂₀-Alkanen, C₁-C₁₅-Alkancarbonsäuren und/oder C₁-C₁₅-Alkanolen.

5. Verfahren nach den Ansprüchen 1 bis 4, **dadurch gekennzeichnet, dass** Lambda, definiert als das Verhältnis vorhandener Sauerstoff / Verbrennung des Brenngases notwendiger Sauerstoff, 1,8 bis 4,0 beträgt.

6. Mischoxid mit der Zusammensetzung Liₓ Mn_{0,5-a} Ni_{0,5-b} Co_{a+b} O₂, **dadurch gekennzeichnet, dass**
a) 0,8 ≤ x ≤ 1,2, 0,05 ≤ a ≤ 0,3, 0,05 ≤ b < 0,3, -0,1 ≤ a-b ≤ 0,02 und a + b < 0,5 ist,
b) es eine BET-Oberfläche von 0,05 bis 1 m²/g aufweist,
c) der d₅₀-Wert kleiner oder gleich 10 µm ist und
d) im Röntgendiffraktogramm das Verhältnis der Intensitäten der Signale bei 2Θ = 18,6 ±1° zu 2Θ = 44,1±1°größer oder gleich 2,4 ist.

7. Mischoxid nach Anspruch 6, **dadurch gekennzeichnet, dass** die Halbwertsbreite des Signales bei 2Θ = 18,6 ±1° > 0,20 bis 0,40 und 2Θ = 44,1±1° 0,25 bis 0,40 ist.

8. Mischoxid nach Anspruch 6 oder 7, **dadurch gekennzeichnet, dass** es eine hexagonale Kristallgitterstruktur mit einer R3m-Raumgruppe mit den Gitterkonstanten a und c, mit 2,860 ≤ a ≤ 2,900 und 14,200 ≤ c ≤ 14,320, angegeben in Angstrom, aufweist.

9. Mischoxid nach den Ansprüchen 6 bis 8, **dadurch gekennzeichnet, dass** es ein Volumen der Poren mit einem Durchmesser von mehr als 50 nm von 0,30 bis 1,20 ml/g aufweist.

10. Mischoxid nach den Ansprüchen 6 bis 9, **dadurch gekennzeichnet, dass** der d₅₀-Wert von 1 bis 10 µm beträgt.

11. Verfahren zur Herstellung des Mischoxides gemäß der Ansprüche 10 bis 14, **dadurch gekennzeichnet, dass** man das nach dem Verfahren gemäß der Ansprüche 1 bis 5 hergestellte Mischoxid bei Temperaturen von 500 bis 1100°C über einen Zeitraum von 2 bis 36 Stunden thermisch behandelt.

12. Sekundärbatterie enthaltend das Mischoxidpulver gemäß der Ansprüche 6 bis 10 als Material der positiven Elektrode.

## Claims

1. Process for preparing a mixed oxide of the composition LiₓMn_{0.5-}a Ni_{0.5-b} CO_{a+b} O₂, with
a) 0.8 ≤ x ≤ 1.2, 0.05 ≤ a ≤ 0.3, 0.05 ≤ b < 0.3, -0.1 ≤ a-b ≤ 0.02 and a + b < 0.5 and
b) a BET surface area of from 3 to 20 m²/g,
c) a multimodal particle size distribution and
d) a d₅₀ of less than or equal to 5 µm,
**characterized in that**
a) a stream of a solution containing in each case at least one metal compound of the mixed oxide components comprising lithium, cobalt, manganese and nickel in the required stoichiometric ratio is atomized by means of an atomizer gas to give an aerosol, where
a1) the concentration of the solution of metal compounds is at least 10% by weight, in each case calculated as metal oxide,
a2) the ratio of the mass stream of the solution/volume stream of the atomizer gas, in g of solution/standard m³ of atomizer gas, is at least 500, and
a3) the average droplet size is 100 µm or less,
b) the aerosol is reacted in a reaction space by means of a flame obtained from a fuel gas and an oxygen-containing gas, with the total amount of oxygen being sufficient for at least complete reaction of the fuel gas and of the metal compounds,
c) the reaction stream is cooled and
d) the solid product is subsequently separated off from the reaction stream.

2. Process according to Claim 1, **characterized in that** the average exit velocity of the aerosol into the reaction space is at least 50 ms⁻¹ and the average velocity of the reaction mixture in the reaction space is from 0.1 ms⁻¹ to 10 ms⁻¹.

3. Process according to Claim 1 or 2, **characterized in that** inorganic and/or organic metal compounds are used.

4. Process according to any of Claims 1 to 3, **characterized in that** the solvent is selected from the group consisting of water, C₅-C₂₀-alkanes, C₁-C₁₅-alkanecarboxylic acids and C₁-C₁₅-alkanols.

5. Process according to any of Claims 1 to 4, **characterized in that** lambda, defined as the ratio of oxygen present/oxygen required for combustion of the fuel gas, is from 1.8 to 4.0.

6. Mixed oxide having the composition LiₓMn_{0.5-a}Ni_{0.5-b} Co_{a+b} O₂, **characterized in that**
a) 0.8 ≤ x ≤ 1.2, 0.05 ≤ a ≤ 0.3, 0.05 ≤ b < 0.3, - 0.1 ≤ a-b ≤ 0.02 and a + b < 0.5,
b) the mixed oxide has a BET surface area of from 0.05 to 1 m²/g,
c) the d₅₀ is less than or equal to 10 µm and
d) the ratio of the intensities of the signals at 2Θ = 18.6 ±1° to 2Θ = 44.1±1° in the X-ray diffraction pattern is greater than or equal to 2.4.

7. Mixed oxide according to Claim 6, **characterized in that** the width at half height of the signal at 2Θ = 18.6 ±1° > 0.20 to 0.40 und at 2Θ = 44.1±1° is from 0.25 to 0.40.

8. Mixed oxide according to Claim 6 or 7, **characterized in that** it has a hexagonal crystal lattice structure in the R3m space group having the lattice constants a and c, where 2.860 ≤ a ≤ 2.900 and 14.200 ≤ c ≤ 14.320, all in Angstrom.

9. Mixed oxide according to any of Claims 6 to 8, **characterized in that** it has a volume of pores having a diameter of more than 50 nm of from 0.30 to 1.20 ml/g.

10. Mixed oxide according to any of Claims 6 to 9, **characterized in that** the d50 is from 1 to 10 µm.

11. Process for preparing the mixed oxide according to any of Claims 10 to 14, **characterized in that** the mixed oxide prepared by the process according to any of Claims 1 to 5 is thermally treated at temperatures of from 500 to 1100°C for a period of from 2 to 36 hours.

12. Secondary battery containing the mixed oxide powder according to any of Claims 6 to 10 as material of the positive electrode.

## Revendications

1. Procédé de fabrication d'un oxyde mixte de composition LiₓMn_{0,5-a}Ni_{0,5-b}Co_{a+b}O₂, avec
a) 0,8 ≤ x ≤ 1,2, 0,05 ≤ a ≤ 0,3, 0,05 ≤ b ≤ 0,3,-0,1 ≤ a-b ≤ 0, 02 et a+b < 0,5, et
b) une surface BET de 3 à 20 m²/g,
c) une distribution des tailles de particules multimodale, et
d) une valeur d₅₀ inférieure ou égale à 5 µm, **caractérisé en ce que**
a) un courant d'une solution contenant à chaque fois au moins un composé métallique des composants de l'oxyde mixte constitués par le lithium, le cobalt, le manganèse et le nickel en le rapport stoechiométrique nécessaire est atomisé au moyen d'un gaz d'atomisation en un aérosol,
a1) la concentration de la solution en composés métalliques étant d'au moins 10 % en poids, à chaque fois calculée en tant qu'oxyde métallique,
a2) le rapport débit massique de la solution/débit volumique du gaz d'atomisation, en g de solution/Nm³ de gaz d'atomisation, étant d'au moins 500 et
a3) la taille de gouttelette moyenne étant de 100 µm ou moins,
b) l'aérosol est mis en réaction dans une chambre de réaction avec une flamme qui est obtenue à partir d'un gaz de combustion et d'un gaz contenant de l'oxygène, la quantité totale de l'oxygène suffisant au moins pour la réaction totale du gaz de combustion et des composés métalliques,
c) le courant réactionnel est refroidi, puis
d) le produit solide est séparé du courant réactionnel.

2. Procédé selon la revendication 1, **caractérisé en ce que** la vitesse de sortie moyenne de l'aérosol dans la chambre de réaction est d'au moins 50 ms⁻¹ et la vitesse moyenne du mélange réactionnel dans la chambre de réaction est de 0,1 ms⁻¹ à 10 ms⁻¹.

3. Procédé selon les revendications 1 ou 2, **caractérisé en ce que** des composés métalliques inorganiques et/ou organiques sont utilisés.

4. Procédé selon les revendications 1 à 3, **caractérisé en ce que** le solvant est choisi dans le groupe constitué par l'eau, les alcanes en C₅-C₂₀, les acides alcanecarboxyliques en C₁-C₁₅ et/ou les alcanols en C₁-C₁₅.

5. Procédé selon les revendications 1 à 4, **caractérisé en ce que** lambda, défini comme le rapport oxygène présent/oxygène nécessaire pour la combustion du gaz de combustion, est de 1,8 à 4,0.

6. Oxyde mixte de composition LiₓMn_{0,5-a}Ni_{0,5-b}Co_{a+b}O₂, **caractérisé en ce que**
a) 0,8 ≤ x ≤ 1,2, 0,05 ≤ a ≤ 0,3, 0,05 ≤ b ≤ 0,3,-0,1 ≤ a-b ≤ 0, 02 et a+b < 0,5, et
b) il présente une surface BET de 0,05 à 1 m²/g,
c) la valeur d₅₀ est inférieure ou égale à 10 µm, et
d) sur le diffractogramme de rayons X, le rapport entre les intensités des signaux à 2Θ = 18,6 ± 1° par rapport à 2Θ = 44,1 ± 1° est supérieur ou égal à 2,4.

7. Oxyde mixte selon la revendication 6, **caractérisé en ce que** la largeur à mi-hauteur du signal à 2Θ = 18,6 ± 1° est de > 0,20 à 0,40 et à 2Θ = 44,1 ± 1° de 0,25 à 0,40.

8. Oxyde mixte selon la revendication 6 ou 7, **caractérisé en ce qu'**il présente une structure de réseau cristallin hexagonale avec un groupe d'espace R3m avec les constantes de réseau a et c telles que 2,860 ≤ a ≤ 2,900 et 14,200 ≤ c ≤ 14,320, en Angstrom.

9. Oxyde mixte selon les revendications 6 à 8, **caractérisé en ce qu'**il présente un volume des pores d'un diamètre de plus de 50 nm de 0,30 à 1,20 ml/g.

10. Oxyde mixte selon les revendications 6 à 9, **caractérisé en ce que** la valeur d₅₀ est de 1 à 10 µm.

11. Procédé de fabrication de l'oxyde mixte selon les revendications 10 à 14, **caractérisé en ce que** l'oxyde mixte fabriqué par le procédé selon les revendications 1 à 5 est traité thermiquement à des températures de 500 à 1 100 °C pendant une durée de 2 à 36 heures.

12. Batterie secondaire contenant la poudre d'oxyde mixte selon les revendications 6 à 10 en tant que matériau de l'électrode positive.
